# EUROPÄISCHE PATENTSCHRIFT

(11) **EP 3 353 537 B1**
(45) Veröffentlichungstag und Bekanntmachung des Hinweises auf die Patenterteilung: **20.10.2021**
(21) Anmeldenummer: 16766541.3
(22) Anmeldetag: 15.09.2016
(51) Int. Cl.: G01N 21/90

(54) **INSPEKTIONSVERFAHREN UND -VORRICHTUNG ZUR OPTISCHEN DURCHLICHTINSPEKTION VON UNETIKETTIERTEN BEHÄLTERN**
INSPECTION METHOD AND INSPECTION APPARATUS FOR AN OPTICAL TRANSMITTED-LIGHT INSPECTION OF UNLABELLED CONTAINERS
PROCÉDÉ ET DISPOSITIF D'EXAMEN POUR L'EXAMEN OPTIQUE PAR TRANSPARENCE DE RÉCIPIENTS NON ÉTIQUETÉS

(30) Priorität: 24.09.2015 DE 102015218356
(43) Veröffentlichungstag der Anmeldung: 01.08.2018
(73) Patentinhaber: Krones AG, 93073 Neutraubling (DE)
(72) Erfinder: KOLB, Herbert, 93073 Neutraubling (DE); NIEDERMEIER, Anton, 93073 Neutraubling (DE)
(74) Vertreter: Grünecker Patent- und Rechtsanwälte PartG mbB
(86) Internationale Anmeldenummer: PCT/EP2016/071823
(87) Internationale Veröffentlichungsnummer: WO 2017/050634

(56) Entgegenhaltungen:
- EP-A1- 2 202 508
- EP-A2- 2 290 355
- EP-B1- 0 663 069
- DE-A1- 10 140 010
- DE-A1-102009 039 612
- DE-B3-102008 063 076

## Beschreibung

Die Erfindung betrifft ein Inspektionsverfahren und eine Inspektionsvorrichtung zur optischen Durchlichtinspektion von unetikettierten Behältern mit den Merkmalen der Oberbegriffe der Ansprüche 1 bzw. 12.

Üblicherweise werden Inspektionsverfahren bzw. -vorrichtungen in Getränkeabfüllanlagen eingesetzt, um beschädigte oder unsaubere Behälter vor dem Etikettieren zu erkennen und auszusortieren. Bei den Behältern kann es sich beispielsweise um leere oder befüllte Flaschen handeln, die nach der Herstellung, Reinigung oder dem Füllen hinsichtlich Defekte, wie Schmutzpartikel oder Beschädigungen inspiziert werden. Für eine möglichst vollumfängliche Inspektion wird der Behälter aus unterschiedlichen Blickrichtungen mit einem Leuchtschirm durchleuchtet und mit wenigstens einer Kamera in Segmentbildern erfasst. Anschließend werden die Segmentbilder jeweils einzeln mittels Bildverarbeitung hinsichtlich der Defekte ausgewertet.

Aus der EP 0663069 B1 ist eine Inspektionsmaschine für Flaschen bekannt, bei der zur Seitenwandkontrolle eine Beleuchtungseinrichtung und eine Bildaufnahmeeinrichtung eingesetzt werden. Dabei wird die Seitenwand der Flasche mittels einer Spiegelanordnung aus verschiedenen Richtungen in die Kamera abgebildet.

Die EP 0 663 069 B1 offenbart eine Inspektionsmaschine mit einer Spiegelanordnung zur Prüfung einer Flasche aus umfänglich verschiedenen Richtungen.

Die DE 10 2008 063076 B3 offenbart eine Flascheninspektionsvorrichtung mit einem abbildungskorrigierten Spiegelkabinett.

Die EP 2 202 508 A1 offenbart eine Inspektionsvorrichtung zur Untersuchung der Außenoberfläche von Behältnissen mit einer Strahlungseinrichtung.

Nachteilig bei den bekannten Inspektionsverfahren bzw. -vorrichtungen ist es, dass sich die einzelnen Segmentbilder des erfassten Behälters um ein gewisses Maß überlappen müssen, damit Defekte zuverlässig erkannt werden können. Dazu muss bei der Inspektionsvorrichtung eine gewisse Reserve vorgesehen werden, beispielsweise beim Blickwinkel der Kamera oder der Bildauflösung. Darüber hinaus müssen die Überlappbereiche jeweils doppelt in den beiden angrenzenden Segmentbildern ausgewertet werden, um darin Defekte zuverlässig zu erkennen. Demnach sind die bekannten Inspektionsverfahren bzw. -vorrichtungen hinsichtlich des optischen Systems und der Bildverarbeitung entsprechend aufwendig ausgelegt.

Aufgabe der vorliegenden Erfindung ist es daher, ein Inspektionsverfahren zur optischen Durchlichtinspektion von unetikettierten Behältern bereitzustellen, das hinsichtlich des optischen Systems, der Kamera und der Bildverarbeitung weniger aufwendig und dadurch kostengünstiger ist.

Zur Lösung dieser Aufgabe stellt die Erfindung ein Inspektionsverfahren zur Durchlichtinspektion von unetikettierten Behältern mit den Merkmalen des Anspruchs 1 bereit.

Vorteilhafte Ausführungsformen sind in den Unteransprüchen genannt.

Dadurch, dass die erfassten Segmentbilder vor der Auswertung zu einem einzelnen Panoramabilddatensatz zusammengesetzt werden, so dass Überlappbereiche der Segmentbilder im Panoramabilddatensatz zusammengefügt sind, wird die Information der Überlappbereiche jeweils von den angrenzenden Segmentbildern her zusammengefasst und nur einmal im Panoramabilddatensatz abgelegt. Darüber hinaus sind auch Defekte, die jeweils nur teilweise in zwei aneinander angrenzenden Segmentbildern erfasst werden, im Panoramabilddatensatz zusammengefügt. Dadurch können die Überlappbereiche unabhängig von der Größe der Defekte ausgewählt und das optische System sowie die Kamera effizienter ausgelegt werden. Darüber hinaus müssen die einzelnen Segmentbilder an den Überlappbereichen nicht mehr doppelt ausgewertet werden, was hinsichtlich der eingesetzten Rechenkapazität einer Bildverarbeitungseinrichtung besonders günstig ist. Folglich ist das erfindungsgemäße Inspektionsverfahren weniger aufwendig und damit besonders kostengünstig.

Das Inspektionsverfahren kann in einer Getränkeverarbeitungsanlage durchgeführt werden, beispielsweise in einer Inspektionsvorrichtung mit einer Bildverarbeitungseinrichtung. Das Inspektionsverfahren kann in einer Vollflaschen- oder Leerflascheninspektionsmaschine eingesetzt werden. Das Inspektionsverfahren kann einem Behälterherstellungs-, Reinigungs-, Füll und/oder Verschlussverfahren nachgeordnet sein. Denkbar ist auch, dass das Inspektionsverfahren einem Etikettierverfahren vorgeordnet ist. Ferner kann das Inspektionsverfahren zur Inspektion von zurückgenommenen Mehrwegbehältern eingesetzt werden.

Die Behälter können dazu vorgesehen sein, Getränke, Nahrungsmittel, Hygieneartikel, Pasten, chemische, biologische und/oder pharmazeutische Produkte aufzunehmen. Die Behälter können Kunststoffflaschen, Glasflaschen, Dosen und/oder Tuben sein. Bei Kunststoffbehältern kann es sich im speziellen um PET-, PEN-, HD-PE oder PP-Behälter bzw. Flaschen handeln. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais bestehen. Der Behälter kann mit einem Verschluss versehen sein, beispielsweise mit einem Kronkorken, Schraubverschluss, Abreißverschluss oder dergleichen. "Unetikettierte Behälter" kann hier bedeuten, dass es sich um einen Behälter ohne ein darauf angebrachtes Etikett handelt. Ferner kann wenigstens die Seitenwand des Behälters lichtdurchlässig sein, wobei vorzugsweise die Oberfläche des Behälters glatt, also ohne Streustrukturen ausgebildet ist.

Denkbar ist, dass das Inspektionsverfahren zur Seitenwandkontrolle und/oder Inhaltskontrolle der Behälter hinsichtlich Defekte eingesetzt wird. Die Defekte können Verschmutzungen und/oder Beschädigungen des Behälters und/oder dessen Inhalts umfassen.

Die Transporteinrichtung kann ein Linearförderer (Geradläufer) oder ein Karussel sein. Die Transporteinrichtung kann die Behälter mit Behälteraufnahmen aufnehmen und zur Inspektionsposition hin- und/oder wegtransportieren. Der Linearförderer kann beispielsweise ein Förderband sein, auf dem die Behälter stehen. "Inspektionsposition zwischen einem Leuchtschirm und wenigstens einer Kamera" kann hier bedeuten, dass die Behälter zwischen dem Leuchtschirm und der Kamera transportiert werden. Denkbar ist, dass die Behälter bei der Inspektion entweder fortlaufend transportiert oder einzeln angehalten werden. Der Leuchtschirm bzw. die wenigstens eine Kamera können auf verschiedenen Seiten der Transporteinrichtung angeordnet sein.

Der Leuchtschirm kann eine flächige Lichtaustrittsfläche umfassen, die vorzugsweise größer als eine Seitenansicht des Behälters ist. Der Leuchtschirm kann wenigstens eine Lichtquelle, wie beispielsweise eine Glühbirne, eine Leuchtstoffröhre oder eine LED umfassen. Vorzugsweise kann der Leuchtschirm eine Matrix aus LEDs umfassen, die zueinander parallel angeordnet sind. Ferner kann der Leuchtschirm eine Diffusorscheibe zur Homogenisierung des vom Leuchtschirm abgestrahlten Lichts umfassen, die insbesondere als die Lichtaustrittsfläche ausgebildet ist. Die Lichtaustrittsfläche kann vorzugsweise quadratisch oder rechteckig ausgebildet sein.

Die wenigstens eine Kamera kann einen vorzugsweise als Matrix ausgebildeten Bildsensor, beispielsweise einen CCD- oder CMOS-Sensor, ein Objektiv, eine Ausleseelektronik und/oder ein Dateninterface umfassen. Die wenigstens eine Kamera kann dazu ausgebildet sein, Bilddaten an eine Bildverarbeitungseinrichtung auszugeben. Denkbar ist auch, dass die Bildverarbeitungseinrichtung in die Kamera integriert ist. Die wenigstens eine Kamera kann mit ihrer optischen Achse auf die Lichtaustrittsfläche des Leuchtschirms ausgerichtet sein. Denkbar ist auch, dass mehrere Kameras auf dieselbe Lichtaustrittsfläche des Leuchtschirms ausgerichtet sind oder dass mehrere Blickrichtungen einer Kamera auf den Leuchtschirm ausgerichtet sind, beispielsweise mittels eines Spiegelkabinetts.

Mit Durchlichtinspektion kann hier gemeint sein, dass der Behälter vom Licht des Leuchtschirms zunächst durchlaufen und dann mit der wenigstens einen Kamera erfasst wird.

Die unterschiedlichen Blickrichtungen können jeweils einer Kameraperspektive auf dem Behälter entsprechen. Ebenso können die unterschiedlichen Blickrichtungen jeweils einem Pfad eines Spiegelkabinetts entsprechen. Alternativ kann jede der unterschiedlichen Blickrichtungen jeweils der Perspektive einer Kamera entsprechen. Anders ausgedrückt können auch mehrere Kameras auf den zu inspizierenden Behälter gerichtet sein. Denkbar ist auch, dass die unterschiedlichen Blickrichtungen über mehrere Kameras und Spiegelkabinette erfasst werden.

Mit Bildverarbeitung kann hier gemeint sein, dass die Kamerabilder, die Segmentbilder und/oder der Panoramabilddatensatz mittels elektronischer Datenverarbeitung ausgewertet werden, beispielsweise mit einem Computerprogramm. Die Segmentbilder können jeweils eine 2D-Matrix mit Pixeln umfassen. Mehrere Segmentbilder können Teil eines Kamerabilds sein, beispielsweise die Teilbilder, die jeweils über einen Pfad des Spiegelkabinetts in die Kamera abgebildet werden.

Erfindungsgemäß ist vorgesehen, dass die Überlappbereiche der Segmentbilder im Panoramabilddatensatz deckungsgleich zusammengeführt werden. Dadurch kann der Panoramabilddatensatz besonders zuverlässig ausgewertet werden, ohne dass Defekte doppelt erkannt werden. Andererseits kann das Verfahren auch durchgeführt werden, wenn sich die Segmentbilder im Überlappbereich mit einer Toleranz von 0 - 4°, vorzugsweise von 0 ― 2° überlappen. Dies ist jedoch nicht Bestandteil der vorliegenden Erfindung. Die Toleranz kann sich auf den Winkel der zugehörigen Blickrichtungen um eine Behälterachse herum beziehen. Anders ausgedrückt, kann dies die Winkeltoleranz der Blickrichtung entlang der Behälteroberfläche in Richtung um die Behälterachse herum sein. Der Panoramabilddatensatz kann eine Bilddatei mit genau einem Bild bestehend aus einer 2D-Matrix von Pixeln umfassen. Der Panoramabilddatensatz kann eine Abwicklung der Behälteroberfläche umfassen, insbesondere eines zylindrischen Abschnitts der Behälteroberfläche, vorzugsweise der vollumfänglichen Seitenwand. Anders ausgedrückt kann der Panoramabilddatensatz eine Projektion der um eine Behälterlängsachse verlaufenden Behälteroberfläche auf eine 2D-Matrix sein. Nach dem Zusammensetzen der erfassten Segmentbilder kann deren Bildinformation im Panoramabilddatensatz sequentiell nebeneinander angeordnet sein, wobei sich jeweils zwei Segmentbilder in einem Überlappbereich überlappen. Denkbar ist auch, dass die Bildinformation der erfassten Segmentbilder nicht nur sequentiell nebeneinander sondern auch matrixartig übereinander angeordnet ist. Die Segmentbilder und/oder der einzelne Panoramabilddatensatz können jeweils eine Bilddatei in einem Standardbildformat sein, beispielsweise JPEG, TIFF oder dergleichen.

Das Zusammensetzen der Segmentbilder zum Panoramabilddatensatz kann auf Basis einer geometrischen Systemkalibrierung durchgeführt werden. Durch die geometrische Systemkalibrierung erfolgt das Zusammensetzen nicht nur auf Basis der Überlappbereiche sondern auch in Kenntnis der wenigstens einen Kamera und/oder des Behälters, wodurch die Segmentbilder in den Überlappbereichen besonders gut deckungsgleich zusammengefügt werden können. Darüber hinaus kann dadurch die Bildperspektive im Panoramabilddatensatz entzerrt werden. Mittels der geometrischen Systemkalibrierung kann die Behälteroberfläche und/oder die Segmentbilder auf eine zur Auswertung bestimmte Projektionsfläche projiziert werden, wobei vorzugsweise die Projektionsfläche mit dem Panoramabilddatensatz korrespondiert und/oder durch diesen abgebildet wird. Die Projektionsfläche kann beispielsweise eine virtuelle zylindrische Fläche konzentrisch zur Behälterlängsachse sein, die einen größeren Durchmesser aufweist, als der Behälter. Die virtuelle zylindrische Fläche kann beispielsweise abgewickelt werden und so ein Koordinatensystem des Panoramabilddatensatzes bilden. Weiter ist denkbar, dass der Leuchtschirm in die geometrische Systemkalibrierung mit eingeht.

Die geometrische Systemkalibrierung kann Parameterwerte der unterschiedlichen Blickrichtungen mit der wenigstens einen Kamera umfassen, insbesondere eine Position, Ausrichtung und/oder Abbildungswerte der wenigstens einen Kamera und/oder eines Spiegelkabinetts. Dadurch kann einem 3D-Punkt auf oder im Behälter jeweils ein Pixel eines Segmentbilds zugeordnet werden. Folglich ist es möglich, die Bildperspektive der jeweiligen Kamera beim Zusammensetzen des Panoramabilddatensatzes mit zu berücksichtigen. Weiter ist es über die Abbildungswerte möglich, Verzerrungen der Kamera und/oder des Spiegelkabinetts zu berücksichtigen und dadurch eine Entzerrung der jeweiligen Segmentbilder zu berechnen. Beispielsweise könnten zwei unterschiedliche Blickrichtungen mit den jeweiligen Segmentbildern als stereoskopische Aufnahme herangezogen werden, um zusätzliche 3D-Informationen in den Panoramabilddatensatz einzurechnen.

Die geometrische Systemkalibrierung kann Parameterwerte für einen erfassten Behälter umfassen, insbesondere eine Behälterposition, einen Behälterdurchmesser, eine Behälterlängsachse, eine Profilkurve des Behälters, ein 3D-Modell des Behälters und/oder eine Abwicklung einer Behälteroberfläche. Dadurch ist es möglich, die Geometrie des erfassten Behälters beim Zusammensetzen des Panoramabilddatensatzes zu berücksichtigen. Beispielsweise kann mittels einer bekannten Abwicklung der Behälteroberfläche und in Kenntnis der zugehörigen Kamerapositionen jedes Pixel in einem Segmentbild der abgewickelten Behälteroberfläche zugeordnet werden und damit einer 2D-Matrix des Panoramabilddatensatzes. Die Behälterposition kann beispielsweise über einen bekannten CAD-Datensatz (Computer Aided Design) der Inspektionsvorrichtung berechnet werden. Ebenso ist es möglich, dass die Behälterposition mittels eines Sensors erfasst wird. Der Behälterdurchmesser, die Behälterlängsachse, die Profilkurve des Behälters, das 3D-Modell des Behälters und/oder die Abwicklung der Behälteroberfläche können aus einem CAD-Datensatz stammen. Ebenfalls ist es möglich, dass diese Parameterwerte aus einem 3D-Scan des zu erfassenden Behälters bekannt sind. Denkbar ist auch, dass das 3D-Modell mittels einer Eingabe einer Kontur im Kamerabild berechnet wird. Dadurch kann die Kontur im Kamerabild (2D-Matrix) auf ein 3D-Modell zurück gerechnet werden, um beispielsweise den Behälterdurchmesser, die Behälterlängsachse und/oder die Profilkurve zu erhalten.

Die geometrische Systemkalibrierung kann Parameterwerte der Transporteinrichtung umfassen, insbesondere die Inspektionsposition und/oder Positionierungsparameter einer Behälterführung. Dadurch ist es beispielsweise möglich, die dynamische Positionierung des Behälters zu erfassen und so die erfassten Segmentbilder zum Panoramabilddatensatz zusammenzufügen. Denkbar ist, dass aus einem CAD-Modell der Inspektionsvorrichtung die Geometrie der Transporteinrichtung sowie eine Anordnung der Kamera, des Spiegelkabinetts und/oder des Leuchtschirms ermittelt werden. Aus einem Encoder kann beispielsweise die dynamische Position des Behälters und damit das genaue Erreichen der Inspektionsposition berechnet werden. Die tatsächliche Inspektionsposition kann dann beim Zusammensetzen der Segmentbilder zum einzelnen Panoramabilddatensatz berücksichtigt werden. Mit "Positionierungsparameter einer Behälterführung" kann hier gemeint sein, dass der Behälter zusätzlich zur Transportbewegung mittels einer Behälterführung verfahren und/oder gedreht wird. Auch kann über Encoder-Daten die genaue Position bzw. Drehung des Behälters ermittelt werden. Anders ausgedrückt kann durch die Parameterwerte der Transporteinrichtung die genaue Position und/oder Drehlage des Behälters beim Zusammensetzen der Segmentbilder zum Panoramabilddatensatz berücksichtigt werden.

Ein Kalibrierkörper kann an die Inspektionsposition eingesetzt werden und damit die Parameterwerte der geometrischen Systemkalibrierung bestimmt werden. Anders ausgedrückt können mit dem Kalibrierkörper die tatsächlichen Parameterwerte der Inspektionsvorrichtung bestimmt werden, da beispielsweise die tatsächliche Geometrie der Inspektionsvorrichtung oder Abbildungsparameter der Kameras mit Fertigungstoleranzen beaufschlagt und daher nicht vollständig aus einem CAD-Datensatz bekannt sind. Darüber hinaus ist es möglich, die geometrische Systemkalibrierung ganz ohne vorab bekannte CAD-Daten der Inspektionsvorrichtung zu ermitteln. Der Kalibrierkörper kann eine Behälterform aufweisen. Weiter kann der Kalibrierkörper mit Kugeln, Ringen oder dergleichen versehen und/oder bedruckt sein, die mittels Bildverarbeitung besonders leicht identifizierbar sind. Dadurch können einzelne Positionen auf dem Kalibrierkörper genau berechnet und für die Ermittlung der geometrischen Systemkalibrierung herangezogen werden.

Bildmerkmale, insbesondere Defekte, von unterschiedlichen Oberflächenseiten des erfassten Behälters können mittels der geometrischen Systemkalibrierung derart verarbeitet werden, dass diese in Abhängigkeit von der Oberflächenseite unterschiedlich verstärkt und/oder getrennt werden. Anders ausgedrückt kann mit der geometrischen Systemkalibrierung berechnet werden, ob ein spezifisches Bildmerkmal auf einer Vorderseite oder einer Rückseite des Behälters stammt. Beispielsweise dadurch, dass sich ein Defekt auf der Vorderseite beim Wechsel von einem Segmentbild zu einem Anderen anders verlagert als dies bei einem Defekt auf der Rückseite der Fall wäre. Mit Vorderseite kann hier die Seitenwand des Behälters gemeint sein, die beim Erfassen der Kamera zugewandt ist. Mit Rückseite kann dagegen eine Seitenwand gemeint sein, die der Kamera abgewandt bzw. dem Leuchtschirm zugewandt ist. Beispielsweise kann durch eine stereoskopische Aufnahme mittels zweier unterschiedlichen Blickrichtungen berechnet werden, auf welcher Oberflächenseite ein bestimmtes Bildmerkmal liegt. Ein Bildmerkmal kann einem Defekt, beispielsweise einer Verschmutzung oder einer Beschädigung des Behälters zugeordnet sein. Anders ausgedrückt kann ein Bildmerkmal die Abbildung des Defekts im Segmentbild und/oder im Panoramabilddatensatz sein.

Denkbar ist, dass aus einer Bildkoordinate einer ersten Blickrichtung über die geometrische Systemkalibrierung eine Bildkoordinate einer zweiten Blickrichtung berechnet wird. Dadurch können die jeweiligen Bildkoordinaten (Pixel) von zwei unterschiedlichen Blickrichtungen bzw. den zugehörigen Segmentbildern einander zugeordnet werden und dadurch erfolgt das Zusammensetzen des Panoramabilddatensatzes in den Überlappbereichen besonders genau.

Der Behälter kann über ein Spiegelkabinett erfasst werden, so dass wenigstens zwei, vorzugsweise drei der unterschiedlichen Blickrichtungen mit einem Bildsensor der Kamera gleichzeitig erfasst werden. Dadurch ist zur Erfassung der unterschiedlichen Blickrichtungen lediglich eine Kamera notwendig.

Denkbar ist, dass der Behälter mit mehreren Aufnahmeeinrichtungen erfasst wird, wobei jede Aufnahmeeinrichtung einen Leuchtschirm auf der einen Seite der Transporteinrichtung und ein Spielkabinett und/oder wenigstens eine Kamera auf der anderen Seite der Transporteinrichtung umfasst. Denkbar ist, dass mit jeder der Aufnahmeeinrichtungen der Behälter aus zwei, vorzugsweise drei unterschiedlichen Blickrichtungen mit jeweils einem zugehörigen Segmentbild erfasst wird. Wird der Behälter mit einem Spiegelkabinett aus drei unterschiedlichen Blickrichtungen erfasst, so können die unterschiedlichen Blickrichtungen jeweils um 30 Grad gegenüber der Behälterlängsachse zueinander verdreht liegen. Entsprechend kann dann die gesamte Oberfläche des Behälters mit vier Aufnahmeeinrichtungen erfasst werden, die jeweils drei unterschiedliche Blickrichtungen mit der Kamera aufnehmen.

Der Behälter kann zur Erfassung der unterschiedlichen Blickrichtungen mittels einer Behälterführung um eine Drehachse gedreht werden, wobei die Drehachse vorzugsweise parallel zu einer Behälterlängsachse ist oder damit zusammenfällt. Dadurch können zusätzlich zur ursprünglichen Position des Behälters nach der Drehung weitere Blickrichtungen auf den Behälter erfasst werden und es ist eine vollumfängliche Inspektion des Behälters möglich.

Beispielsweise kann der Behälter jeweils mit wenigstens einer ersten Kamera als erster Teil der Segmentbilder erfasst werden, dann mit der Behälterführung gedreht und/oder transportiert und anschließend mit wenigstens einer zweiten Kamera als zweiter Teil der Segmentbilder erfasst werden, wobei der erste und zweite Teil der Segmentbilder zu dem einzelnen Panoramabilddatensatz zusammengesetzt werden. Anders ausgedrückt kann der Behälter zwischen den Aufnahmen durch zwei verschieden Kameras gedreht werden, vorzugsweise um 30, 45, 60, 90, 120 oder 180 Grad. Denkbar ist auch, dass der Behälter zunächst mit zwei gegenüber der Transporteinrichtung um 180 Grad versetzten Aufnahmeeinheiten erfasst wird, dann mit der Behälterführung vorzugsweise um 90 Grad gedreht und dann mittels zwei weiteren um 180 Grad bezüglich der Transporteinrichtung versetzten Aufnahmeeinheiten erfasst wird. Dadurch ist es möglich, insgesamt vier wenigstens 90 Grad umfassende Oberflächenbereiche des Behälters mit jeweils einem Spiegelkabinett und einer Kamera zu erfassen. Beispielsweise wird der Behälter bei vier Spiegelkabinetten mit jeweils drei unterschiedlichen Blickrichtungen aus insgesamt zwölf unterschiedlichen Blickrichtungen erfasst. Dadurch ist eine besonders hohe Auflösung der Behälteroberfläche zur Inspektion möglich.

Darüber hinaus stellt die Erfindung eine Inspektionsvorrichtung zur optischen Durchlichtinspektion von unetikettierten Behältern mit den Merkmalen des Anspruchs 12 bereit.

Vorteilhafte Ausführungsformen sind in den Unteransprüchen genannt.

Wie weiter oben bereits im Detail ausgeführt, werden mit der Bildverarbeitungseinrichtung der Inspektionsvorrichtung die erfassten Segmentbilder vor der Auswertung zunächst zu einem einzelnen Panoramabilddatensatz zusammengefasst. Dadurch müssen die Überlappbereiche nicht mehr in den jeweiligen Segmentbildern doppelt sondern nur einmal im Panoramabilddatensatz ausgewertet werden. Des Weiteren kann das optische System und die Kamera der Inspektionsvorrichtung effizienter ausgelegt werden, da die Überlappbereiche der Segmentbilder kleiner ausfallen können. Dadurch ist die Inspektionsvorrichtung weniger aufwändig und damit kostengünstiger.

Die Bildverarbeitungseinrichtung kann einen Mikroprozessor, einen Speicher und/oder ein Dateninterface umfassen. Die Bildverarbeitungseinrichtung kann in der Inspektionsvorrichtung, der Kamera selbst oder einem externen Computer angeordnet sein. Die Bildverarbeitungseinrichtung kann dazu vorgesehen sein, im Panoramabilddatensatz als Bildmerkmale abgebildete Defekte zu analysieren, isolieren, detektieren und/oder zu bestimmen.

Die Inspektionsvorrichtung kann ein Spiegelkabinett umfassen, das zwischen der Inspektionsposition und der Kamera angeordnet ist, um wenigstens zwei, vorzugsweise drei unterschiedliche Blickrichtungen mit einem Bildsensor der Kamera gleichzeitig zu erfassen. Dadurch werden einzelne Oberflächenbereiche des Behälters möglichst senkrecht erfasst und es sind weiter weniger Kameras notwendig.

Die Inspektionsvorrichtung kann eine Behälterführung umfassen, die zum Drehen des Behälters um eine Drehachse ausgebildet ist. Beispielsweise kann die Behälterführung wenigstens zwei gegenläufige Riemen umfassen oder eine feststehende Führungsschiene und einen Riemen, um den Behälter seitlich aufzunehmen und zu drehen. Dadurch kann der Behälter zur Erfassung unterschiedlicher Blickrichtungen gedreht werden. Beispielsweise kann eine Behälteroberfläche in Richtung oder entgegen der Transportrichtung zeigen und so besonders unzugänglich für die Abbildung in einer bestimmten Blickrichtung sein. Wird der Behälter nun gedreht, so kann die zunächst schlecht zugängliche Oberfläche der Kamera zugewendet und besser inspiziert werden.

Darüber hinaus kann die Inspektionsvorrichtung die zuvor in Bezug auf das Inspektionsverfahren beschriebenen Merkmale, vorzugsweise nach einem der Ansprüche 1-11, einzeln oder in beliebigen Kombinationen umfassen.

Darüber hinaus werden weitere Merkmale und Vorteile der Erfindung in den nachfolgenden Ausführungsbeispielen genauer beschrieben. Dabei zeigt:
- Fig. 1: ein Ausführungsbeispiel eines Inspektionsverfahrens zur optischen Durchlichtinspektion von unetikettierten Behältern in einem Flussdiagramm; und
- Fig. 2: ein Ausführungsbeispiel einer Inspektionsvorrichtung zur optischen Durchlichtinspektion von unetikettierten Behältern in einer Draufsicht.

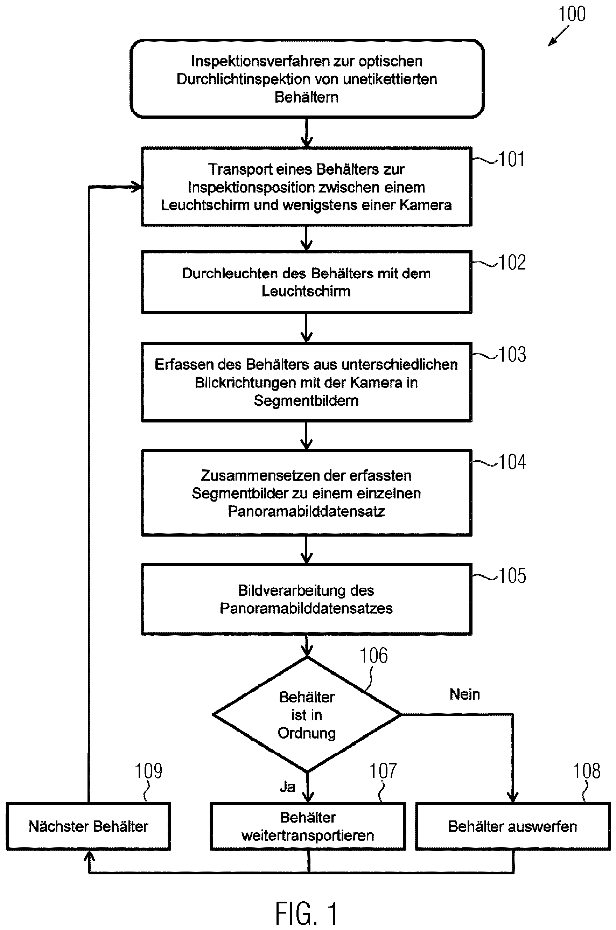

In der Fig. 1 ist ein Ausführungsbeispiel des Inspektionsverfahrens 100 zur optischen Durchlichtinspektion von unetikettierten Behältern als Flussdiagramm dargestellt.

Zunächst wird im Schritt 101 ein unetikettierter Behälter zwischen einem Leuchtschirm und wenigstens einer Kamera transportiert. Beispielsweise wird der Behälter mit einem Linearförderer kontinuierlich transportiert, denkbar ist allerdings auch, dass der Behälter jeweils zur Inspektion in der Inspektionsposition angehalten wird.

Im Schritt 102 wird dann der Behälter mit dem Leuchtschirm an der Inspektionsposition durchleuchtet. Dazu ist die Lichtaustrittsfläche des Leuchtschirms vorzugsweise größer als die zu inspizierende Seitenwand des Behälters ausgebildet. Beim Durchleuchten durchläuft das Licht den unetikettierten Behälter quer zur Längsachse und gelangt anschließend zu der wenigstens einen Kamera.

Im Schritt 103 wird dann der Behälter aus unterschiedlichen Blickrichtungen mit der Kamera in Segmentbildern erfasst. Denkbar ist, dass der Behälter über ein Spiegelkabinett mit einer Kamera erfasst wird, so dass die unterschiedlichen Blickrichtungen in einem Kamerabild aufgenommen werden. Die Bereiche des Kamerabilds entsprechend jeweils einem Abbildungspfad des Spiegelkabinetts, die anschließend als Segmentbilder getrennt werden. Ebenso ist denkbar, dass die unterschiedlichen Blickrichtungen jeweils einer Kamera zugeordnet sind, die jeweils aus einer unterschiedlichen Richtung den Behälter erfassen. Des Weiteren ist denkbar, dass der Behälter im Schritt 103 mit weiteren Anordnungen bestehend aus einem Leuchtschirm und wenigstens einer Kamera durchleuchtet und aus unterschiedlichen Blickrichtungen erfasst wird. Hierzu können die Anordnungen jeweils ein Spiegelkabinett mit einer Kamera oder alternativ mehrere Kameras umfassen. Ebenso ist denkbar, dass der Behälter im Schritt 103 mit dem Leuchtschirm durchleuchtet und einer Kamera erfasst wird und anschließend gedreht und mit dem gleichen oder einem weiteren Leuchtschirm durchleuchtet und mit derselben oder einer weiteren Kamera erfasst wird.

Im Schritt 104 werden dann die einzelnen Segmentbilder entsprechend den unterschiedlichen Blickrichtungen zu einem einzelnen Panoramabilddatensatz zusammengesetzt, so dass Überlappbereiche der Segmentbilder im Panoramabilddatensatz deckungsgleich zusammengefügt sind. Anders ausgedrückt kann der Panoramabilddatensatz einer Abwicklung der Behälteroberfläche entsprechen. Des Weiteren ist denkbar, dass die Segmentbilder auf Basis einer geometrischen Systemkalibrierung zum Panoramabilddatensatz zusammengefügt werden. Dazu ist die geometrische Anordnung der Kamera, des Behälters und/oder der Transporteinrichtung bekannt, um daraus auf die Anordnung der unterschiedlichen Blickrichtungen auf den Behälter zu schließen. Beispielsweise können in Kenntnis der Anordnung von zwei Kameras gegenüber dem erfassten Behälter die Bilddaten stereoskopisch ausgewertet werden. Des Weiteren ist denkbar, dass Bildmerkmale auf unterschiedlichen Oberflächenseiten des Behälters mittels der geometrischen Systemkalibrierung jeweils abhängig von der erfassten Seite verstärkt und/oder getrennt werden. Dadurch können beispielsweise Defekte auf einer Behältervorderseite bzw. - rückseite vor der Weiterverarbeitung getrennt werden.

Des Weiteren ist denkbar, dass in einem separaten Schritt ein Kalibrierkörper vorab in die Inspektionsposition eingesetzt wird, um damit die Parameterwerte der geometrischen Systemkalibrierung zu bestimmen. Beispielsweise kann der Kalibrierkörper eine Behälterform aufweisen und zur besseren Erkennung von Oberflächenpunkten durch die Bildverarbeitung Marken, Kugeln oder dergleichen umfassen.

Ist der Panoramabilddatensatz dann zusammengesetzt, so wird er im Schritt 105 mittels bekannter Bildverarbeitungsverfahren ausgewertet. Beispielsweise werden Defekte, wie Verschmutzungen und/oder Beschädigungen des Behälters, über geeignete Auswerteralgorithmen erkannt und markiert.

Liegt bei einem Behälter ein Defekt vor oder wird eine bestimmte Defektgröße und/oder -anzahl überschritten, so wird der Behälter als fehlerhaft bewertet.

Fehlerhafte Behälter können dann in den Schritten 106 und 108 ausgeworfen und gegebenenfalls recycelt werden. Ist dagegen der Behälter in Ordnung, so wird er im Schritt 107 zu weiteren Verarbeitungsstationen transportiert, beispielsweise zu einer nachfolgenden Etikettierungs- und/oder Verpackungsstation.

in den Schritten 109 und 101 wird dann ein weiterer Behälter zur Inspektionsposition transportiert und mit den Schritten 102 - 105, wie zuvor beschrieben, inspiziert.

Dadurch, dass die Segmentbilder vor der Auswertung mittels der Bildverarbeitung zu einem einzelnen Panoramabilddatensatz so zusammengesetzt werden, so dass Überlappbereiche der Segmentbilder im Panoramabilddatensatz deckungsgleich zusammengefügt sind, erfolgt die Auswertung auf Basis eines einzelnen Bildes. Dadurch müssen im Bereich der Überlappbereiche nicht Segmentbilder doppelt ausgewertet werden. Des Weiteren kann der Überlappbereich auch kleiner ausgewählt werden, da Defekte, die größer als der Überlappbereich sind, im Panoramabilddatensatz zusammengesetzt sind. Folglich sind bei dem Verfahren die Bildauswertung sowie das optische System und die Kamera weniger aufwendig und damit kostengünstig.

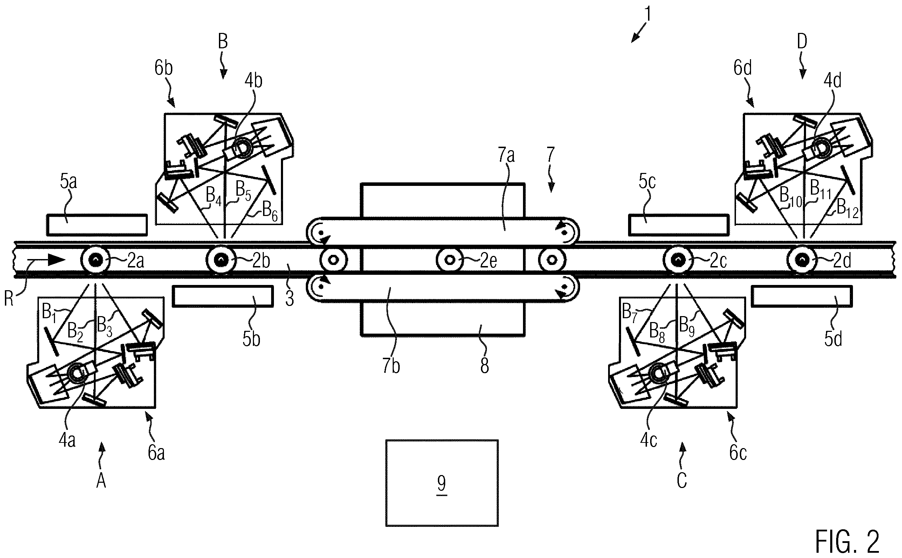

In der Fig. 2 ist ein Ausführungsbeispiel einer Inspektionsvorrichtung 1 zur optischen Durchlichtinspektion von unetikettierten Behältern 2a - 2e in einer Draufsicht dargestellt. Zu sehen ist die Transporteinrichtung 3, die hier als Linearförderer ausgebildet ist und die die Behälter 2a - 2e in Transportrichtung R transportiert. Denkbar ist allerdings auch, dass die Transporteinrichtung 3 als Karussel ausgebildet ist.

Des Weiteren sind die baugleichen Aufnahmeeinheiten A, B, C und D zu sehen, die jeweils eine Kamera 4a-d, einen Leuchtschirm 5a-d und ein Spiegelkabinett 6a-d umfassen.

Im Folgenden wird anhand der Aufnahmeeinheit A deren Aufbau genauer dargestellt: Der Leuchtschirm 5a weist mehrere in einer Matrix angeordnete LEDs auf, die parallel zueinander angeordnet sind und Licht in Richtung einer Diffusorscheibe abstrahlen. Die Diffusorscheibe ist parallel zur Transportrichtung R angeordnet und bildet eine Lichtaustrittsfläche, die Licht in Richtung des Spiegelkabinetts 6a abstrahlt, das dem Leuchtschirm 5a gegenüberliegend an der Transporteinrichtung 3 angeordnet ist. Das so abgestrahlte Licht durchleuchtet zunächst den Behälter 2a und gelangt anschließend zum Spiegelkabinetts 6a und dann zur Kamera 4a, mit dem die unterschiedlichen Blickrichtungen B₁-B₃ als einzelne Segmentbilder in einem Kamerabild erfasst werden.

Die drei Blickrichtungen B₁-B₃ sind jeweils zueinander um 30° versetzt angeordnet und werden über ein Objektiv auf einen Bildsensor in der Kamera 4a abgebildet. Bei der Durchlichtinspektion mit der Aufnahmeeinheit A wird der Behälter 2a also durchleuchtet und die Seitenwand erscheint in drei unterschiedlichen Blickrichtungen B₁-B₃ als nebeneinander angeordnete Segmentbilder in dem Kamerabild der Kamera 4a.

Alternativ ist auch denkbar, dass für jede Blickrichtung B₁-B₃ eine separate Kamera eingesetzt wird.

Anschließend wird der Behälter 2a in Transportrichtung R weiter transportiert und gelangt zur Inspektionsposition der Aufnahmeeinheit B. Dort ist gerade der Behälter 2b zu sehen, der vom Leuchtschirm 5b durchleuchtet und in entgegengesetzten Blickrichtungen B₄-B₆ mit der Kamera 4b über das Spiegelkabinett 6b erfasst wird. Anders ausgedrückt werden mit der Aufnahmeeinheit B zusätzlich drei weitere Blickrichtungen B₄-B₆ auf den Behälter 2b erfasst.

Anschließend wird der Behälter 2b in Transportrichtung R weitertransportiert und mittels der Behälterführung 7 um 90° gedreht. Hierzu sind beispielsweise zwei mit unterschiedlicher Geschwindigkeit angetriebene Riemen 7a, 7b vorgesehen, die den Behälter 2e einerseits transportieren und andererseits um 90° drehen. Optional werden die Behälter 2e dabei durch die Einheit 8 einer Bodeninspektion unterzogen.

Des Weiteren sind nach dem Drehen des Behälters 2e die baugleichen Aufnahmeeinheiten C und D zu sehen, die die Behälter 2c und 2d in den Blickrichtungen B₇-B₉ bzw. B₁₀-B₁₂ im Durchlicht erfassen. Da die Behälter 2c, 2d gegenüber den Behältern 2a, 2b um 90° gedreht sind, erfolgt also das Durchleuchten und Erfassen mit den Aufnahmeeinheiten C und D gegenüber den Aufnahmeeinheiten A und B um 90° verdreht.

Insgesamt werden also mit den Aufnahmeeinheiten A-D jeweils 12 Blickrichtungen B₁-B₁₂ auf einen der Behälter 2a - 2e in Segmentbildern erfasst, die ein Raster von 12 × 30° in Behälterumfangsrichtung, also insgesamt 360° abdecken. Die Bilddaten werden jeweils von den Kameras 4a-4d über Datenleitungen an die Bildverarbeitungseinrichtung 9 weitergeleitet.

Die einzelnen Segmentbilder werden anschließend mittels der Bildverarbeitungseinrichtung 9 und dem zuvor beschriebenen Inspektionsverfahren, insbesondere nach einem der Ansprüche 1 - 11, zu einem einzelnen Panoramabilddatensatz zusammengesetzt, so dass die Überlappbereiche der Segmentbilder im Panoramabilddatensatz deckungsgleich zusammengefügt sind. Anschließend kann dann der Panoramabilddatensatz hinsichtlich der Defekte mit bekannten Bildverarbeitungsalgorithmen ausgewertet werden.

Die Inspektionsvorrichtung 1 nach dem Ausführungsbeispiel der Fig. 2 ist dazu ausgebildet, das zuvor beschriebene Inspektionsverfahren, insbesondere nach einem der Ansprüche 1-11 und/oder nach dem Ausführungsbeispiel in der Fig. 1 durchzuführen.

Da die einzelnen Segmentbilder der unterschiedlichen Blickrichtungen B₁-B₁₂ zunächst zu einem einzelnen Panoramabilddatensatz zusammengesetzt werden, erfolgt die Bildverarbeitung zur Auffindung von Defekten in einem einzelnen Schritt auf Basis des Panoramabilddatensatzes. Es müssen also nicht mehr die Überlappbereiche in zwei Segmentbildern doppelt ausgewertet werden. Dadurch müssen die Spiegelkabinette 6a ― 6d bzw. die Kameras 4a ― 4d nicht mehr einen so großen Umfangsbereich eines Behälters 2a ― 2e erfassen, so dass der Überlappbereich der einzelnen Segmentbilder kleiner ausfällt. Folglich können die Spiegelkabinette 6a ― 6d kompakter und die Inspektionsvorrichtung 1 damit kostengünstig aufgebaut werden. Ferner kann Rechenkapazität bei der Auswertung des Panoramabilddatensatzes eingespart werden.

Es versteht sich, dass in den zuvor beschriebenen Ausführungsbeispielen genannte Merkmale nicht auf diese Kombination beschränkt sind, sondern einzeln oder in beliebigen anderen Kombinationen möglich sind.

## Patentansprüche

1. Inspektionsverfahren (100) zur optischen Durchlichtinspektion von unetikettierten Behältern, insbesondere leere und/oder befüllte Flaschen, wobei die Behälter mit einer Transporteinrichtung zu wenigstens einer Inspektionsposition zwischen einem Leuchtschirm und wenigstens einer Kamera transportiert werden (101) und von dem wenigstens einen Leuchtschirm durchleuchtet (102) und aus unterschiedlichen Blickrichtungen mit der wenigstens einen Kamera in Segmentbildern erfasst (103) und per Bildverarbeitung ausgewertet werden (105),
**dadurch gekennzeichnet, dass**
die erfassten Segmentbilder vor der Auswertung zu einem einzelnen Panoramabilddatensatz so zusammengesetzt werden, dass Überlappbereiche der Segmentbilder im Panoramabilddatensatz deckungsgleich zusammengefügt sind (104).

2. Inspektionsverfahren nach Anspruch 1, wobei das Zusammensetzen der Segmentbilder zum Panoramabilddatensatz (104) auf Basis einer geometrischen Systemkalibrierung durchgeführt wird.

3. Inspektionsverfahren nach Anspruch 2, wobei die geometrische Systemkalibrierung Parameterwerte der unterschiedlichen Blickrichtungen mit der wenigstens einen Kamera umfasst, insbesondere eine Position, Ausrichtung und/oder Abbildungswerte der wenigstens einen Kamera und/oder eines Spiegelkabinetts.

4. Inspektionsverfahren nach Anspruch 2 oder 3, wobei die geometrische Systemkalibrierung Parameterwerte für einen erfassten Behälter umfasst, insbesondere eine Behälterposition, einen Behälterdurchmesser, eine Behälterlängsachse, eine Profilkurve des Behälters, ein 3D-Modell des Behälters und/oder eine Abwicklung einer Behälteroberfläche.

5. Inspektionsverfahren nach einem der Ansprüche 2 - 4, wobei die geometrische Systemkalibrierung Parameterwerte der Transporteinrichtung umfasst, insbesondere die Inspektionsposition und/oder Positionierungsparameter einer Behälterführung.

6. Inspektionsverfahren nach einem der Ansprüche 2 - 5, wobei ein Kalibrierkörper an die Inspektionsposition eingesetzt wird und damit die Parameterwerte der geometrischen Systemkalibrierung bestimmt werden.

7. Inspektionsverfahren nach einem der Ansprüche 2 - 6, wobei Bildmerkmale, insbesondere Defekte, von unterschiedlichen Oberflächenseiten des erfassten Behälters mittels der geometrischen Systemkalibrierung derart verarbeitet werden, dass diese in Abhängigkeit von der Oberflächenseite unterschiedlich verstärkt und/oder getrennt werden.

8. Inspektionsverfahren nach einem der Ansprüche 2 - 7, wobei aus einer Bildkoordinate einer ersten Blickrichtung über die geometrische Systemkalibrierung eine Bildkoordinate einer zweiten Blickrichtung berechnet wird.

9. Inspektionsverfahren nach einem der vorangegangenen Ansprüche, wobei der Behälter über ein Spiegelkabinett erfasst wird, so dass wenigstens zwei, vorzugsweise drei der unterschiedlichen Blickrichtungen mit einem Bildsensor der Kamera gleichzeitig erfasst werden.

10. Inspektionsverfahren nach einem der vorangegangenen Ansprüche, wobei der Behälter zur Erfassung der unterschiedlichen Blickrichtungen (103) mittels einer Behälterführung um eine Drehachse gedreht wird, die vorzugsweise parallel zu einer Behälterlängsachse ist oder damit zusammenfällt.

11. Inspektionsverfahren nach Anspruch 10, wobei die Behälter jeweils mit wenigstens einer ersten Kamera als erster Teil der Segmentbilder erfasst, dann mit der Behälterführung gedreht und/oder transportiert und anschließend mit wenigstens einer zweiten Kamera als zweiter Teil der Segmentbilder erfasst werden, und wobei der erste und zweite Teil der Segmentbilder zu dem einzelnen Panoramabilddatensatz zusammengesetzt werden.

12. Inspektionsvorrichtung (1) zur optischen Durchlichtinspektion von unetikettierten Behältern (2a - 2d), insbesondere leere und/oder befüllte Flaschen, nach dem Inspektionsverfahren (100) einer der Ansprüche 1 ― 11, mit einem Leuchtschirm (5a ― 5d) zum Durchleuchten der Behälter (2a ― 2d) und wenigstens einer Kamera (4a ― 4d) zum Erfassen der durchleuchteten Behälter (2a ― 2d) aus unterschiedlichen Blickrichtungen (B₁ ― B₁₂) in Segmentbildern und mit einer Transporteinrichtung (3) zum Transport der Behälter (2a ― 2d) an eine zwischen dem Leuchtschirm (5a ― 5d) und der Kamera (4a ― 4d) liegenden Inspektionsposition,
**dadurch gekennzeichnet, dass**
die Inspektionsvorrichtung (1) mit einer Bildverarbeitungseinrichtung (9) zum Zusammensetzen der erfassten Segmentbilder zu einem einzelnen Panoramabilddatensatz ausgebildet ist, wobei Überlappbereiche der Segmentbilder im Panoramabilddatensatz deckungsgleich zusammengefügt sind.

13. Inspektionsvorrichtung (1) nach Anspruch 12, wobei die Inspektionsvorrichtung (1) ein Spiegelkabinett (6a) umfasst, das zwischen der Inspektionsposition und der Kamera (4a) angeordnet ist, um wenigstens zwei, vorzugsweise drei unterschiedliche Blickrichtungen (B₁ ― B₃) mit einem Bildsensor der Kamera (4a) gleichzeitig zu erfassen.

14. Inspektionsvorrichtung nach Anspruch 12 oder 13, wobei die Inspektionsvorrichtung (1) eine Behälterführung (7) umfasst, die zum Drehen des Behälters (2e) um eine Drehachse ausgebildet ist.

## Claims

1. Inspection method (100) for optical transmitted-light inspection of unlabelled containers, in particular empty and/or filled bottles, the containers being transported by a transport device to at least one inspection position between a luminescent screen and at least one camera (101), being transilluminated by the at least one luminescent screen (102) and captured from different viewing directions in segment images (103) by the at least one camera and being evaluated by image processing (105),
**characterised in that,**
the captured segment images, prior to evaluation, are combined to form a single panoramic image data set in such a way that overlapping regions of the segment images are congruently merged together in the panoramic image data set (104).

2. Inspection method according to claim 1, wherein the combination of the segment images to form the panoramic image data set (104) is carried out on the basis of a geometric system calibration.

3. Inspection method according to claim 2, wherein the geometric system calibration comprises parameter values of the different viewing directions using the at least one camera, in particular a position, orientation and/or imaging values of the at least one camera and/or of a mirror cabinet.

4. Inspection method according to either claim 2 or claim 3, wherein the geometric system calibration comprises parameter values for a captured container, in particular a container position, a container diameter, a container longitudinal axis, a profile curve of the container, a 3D model of the container and/or a development of a container surface.

5. Inspection method according to any of claims 2-4, wherein the geometric system calibration comprises parameter values of the transport device, in particular the inspection position and/or positioning parameters of a container guide.

6. Inspection method according to any of claims 2-5, wherein a calibration body is used at the inspection position and the parameter values of the geometric system calibration are thus determined.

7. Inspection method according to any of claims 2-6, wherein image features, in particular defects, of different surface faces of the captured container are processed by means of the geometric system calibration in such a way that they are enhanced and/or separated differently depending on the surface face.

8. Inspection method according to any of claims 2-7, wherein an image coordinate of a second viewing direction is calculated from an image coordinate of a first viewing direction by means of the geometric system calibration.

9. Inspection method according to any of the preceding claims, wherein the container is captured via a mirror cabinet, such that at least two, preferably three of the different viewing directions are captured simultaneously by an image sensor of the camera.

10. Inspection method according to any of the preceding claims, wherein the container is rotated about an axis of rotation by means of a container guide in order to capture the different viewing directions (103), which axis of rotation is preferably parallel to or coincides with a longitudinal axis of the container.

11. Inspection method according to claim 10, wherein the containers are each captured by means of at least one first camera as the first part of the segment images, then rotated and/or transported by means of the container guide, and then captured by means of at least one second camera as the second part of the segment images, wherein the first part and the second part of the segment images are combined to form the individual panoramic image data set.

12. Inspection device (1) for optical transmitted-light inspection of unlabelled containers (2a-2d), in particular empty and/or filled bottles, according to the inspection method (100) of one of claims 1-11, comprising a luminescent screen (5a-5d) for transilluminating the container (2a-2d) and at least one camera (4a-4d) for capturing the transilluminated containers (2a-2d) from different viewing directions (B₁-B₁₂) in segment images, and comprising a transport device (3) for transporting the containers (2a-2d) to an inspection position between the luminescent screen (5a-5d) and the camera (4a-4d),
**characterised in that,**
the inspection device (1) is designed to have an image processing device (9) for combining the captured segment images to form a single panoramic image data set, overlapping regions of the segment images being congruently merged together in the panoramic image data set.

13. Inspection device (1) according to claim 12, wherein the inspection device (1) comprises a mirror cabinet (6a) which is arranged between the inspection position and the camera (4a) in order to capture at least two, preferably three different viewing directions (B₁-B₃) simultaneously by means of an image sensor of the camera (4a).

14. Inspection device according to claim 12 or claim 13, wherein the inspection device (1) comprises a container guide (7) which is designed to rotate the container (2e) about an axis of rotation.

## Revendications

1. Procédé d'examen (100) pour l'examen optique par transparence de récipients non étiquetés, en particulier de bouteilles vides et/ou remplies, dans lequel les récipients sont transportés (101) grâce à un appareil de transport vers au moins une position d'examen située entre un écran luminescent et au moins une caméra et sont éclairés par transparence (102) par le au moins un écran luminescent et sont enregistrés (103) sous forme d'images segmentées à partir de différentes directions d'observation avec la au moins une caméra et sont évaluées (105) par traitement d'image,
**caractérisé en ce que**
les images segmentées enregistrées sont rassemblées avant l'évaluation de manière à fournir un jeu unique de données d'image panoramique de sorte que des régions de chevauchement des images segmentées sont rassemblées (104) de manière coïncidente au sein du jeu de données d'image panoramique.

2. Procédé d'examen selon la revendication 1, dans lequel le rassemblement des images segmentées afin de fournir le jeu de données d'image panoramique (104) est mis en œuvre sur la base d'un étalonnage géométrique de système.

3. Procédé d'examen selon la revendication 2, dans lequel l'étalonnage géométrique de système comprend des valeurs de paramétrage des différentes directions d'observation avec la au moins une caméra, en particulier une position, une orientation et/ou des valeurs d'imagerie de la au moins une caméra et/ou d'une chambre à miroirs.

4. Procédé d'examen selon la revendication 2 ou 3, dans lequel l'étalonnage géométrique de système comprend des valeurs de paramétrage pour un récipient enregistré, en particulier une position de récipient, un diamètre de récipient, un axe longitudinal de récipient, une courbe de profil du récipient, un modèle 3D du récipient et/ou un développement d'une surface de récipient.

5. Procédé d'examen selon l'une quelconque des revendications 2 à 4, dans lequel l'étalonnage géométrique de système comprend des valeurs de paramétrage du dispositif de transport, en particulier la position d'examen et/ou des paramètres de positionnement d'un guide de récipient.

6. Procédé d'examen selon l'une quelconque des revendications 2 à 5, dans lequel un corps d'étalonnage est utilisé au niveau de la position d'examen et les valeurs de paramétrage de l'étalonnage géométrique de système sont ainsi déterminées.

7. Procédé d'examen selon l'une quelconque des revendications 2 à 6, dans lequel des caractéristiques d'image, en particulier des défauts, de différents côtés de surface du récipient enregistré sont traitées au moyen de l'étalonnage géométrique de système de telle manière que celles-ci sont renforcées et/ou séparées différemment en fonction du côté de surface.

8. Procédé d'examen selon l'une quelconque des revendications 2 à 7, dans lequel une coordonnée d'image d'un seconde direction d'observation est calculée par l'intermédiaire de l'étalonnage géométrique de système à partir d'une coordonnée d'image d'une première direction d'observation.

9. Procédé d'examen selon l'une quelconque des revendications précédentes, dans lequel le récipient est enregistré par l'intermédiaire d'une chambre à miroirs, de sorte qu'au moins deux, de manière préférée trois, parmi les différentes directions d'observation sont enregistrées simultanément avec un capteur d'image de la caméra.

10. Procédé d'examen selon l'une quelconque des revendications précédentes, dans lequel le récipient est tourné au moyen d'un guide de récipient autour d'un axe de rotation qui est de manière préférée parallèle à un axe longitudinal de récipient ou coïncide avec celui-ci, afin d'enregistrer les différentes directions d'observation (103).

11. Procédé d'examen selon la revendication 10, dans lequel les récipients sont respectivement enregistrés en tant que première partie des images segmentées avec au moins une première caméra, puis tournés et/ou transportés avec le guide de récipient et enregistrés ensuite en tant que seconde partie des images segmentées avec au moins une seconde caméra, et dans lequel les première et seconde parties des images segmentées sont rassemblées afin de fournir le jeu unique de données d'image panoramique.

12. Dispositif d'examen (1) pour l'examen optique par transparence de récipients non étiquetés (2a à 2d), en particulier de bouteilles vides et/ou remplies, avec le procédé d'examen (100) selon l'une quelconque des revendications 1 à 11, comprenant un écran luminescent (5a à 5d) permettant l'éclairage par transparence des récipients (2a à 2d) et au moins une caméra (4a à 4d) permettant l'enregistrement des récipients (2a à 2d) éclairés par transparence sous forme d'images segmentées à partir de différentes directions d'observation (B1 à B12), et comprenant un appareil de transport (3) permettant le transport des récipients (2a à 2d) jusqu'à une position d'examen située entre l'écran luminescent (5a à 5d) et la caméra (4a à 4d),
**caractérisé en ce que**
le dispositif d'examen (1) présente un appareil de traitement d'image (9) permettant de rassembler les images segmentées enregistrées afin de fournir un jeu unique de données d'image panoramique, dans lequel des régions de chevauchement des images segmentées sont rassemblées de manière coïncidente au sein du jeu de données d'image panoramique.

13. Dispositif d'examen (1) selon la revendication 12, dans lequel le dispositif d'examen (1) comprend une chambre à miroirs (6a) agencée entre la position d'examen et la caméra (4a) afin d'enregistrer simultanément au moins deux, de manière préférée trois, directions d'observation (B1 à B3) différentes avec un capteur d'image de la caméra (4a).

14. Dispositif d'examen selon la revendication 12 ou 13, dans lequel le dispositif d'examen (1) comprend un guide de récipient (7) permettant de faire tourner le récipient (2e) autour d'un axe de rotation.
